# EUROPÄISCHE PATENTSCHRIFT

(11) **EP 1 850 030 B1**
(45) Veröffentlichungstag und Bekanntmachung des Hinweises auf die Patenterteilung: **25.11.2009**
(21) Anmeldenummer: 07001692.8
(22) Anmeldetag: 26.01.2007
(51) Int. Cl.: F16F 9/06

(54) **Schwingungsdämpfer**
Vibration absorber
Amortisseur d'oscillations

(30) Priorität: 29.04.2006 DE 102006020066
(43) Veröffentlichungstag der Anmeldung: 31.10.2007
(73) Patentinhaber: Dr. Ing. h.c. F. Porsche Aktiengesellschaft, 70435 Stuttgart (DE)
(72) Erfinder: Poetsch, Günter, 75417 Mühlacker (DE); Klandt, Michael, 71686 Remseck (DE); Schulz, Achim, 75223 Niefern-Oeschelbronn (DE)

(56) Entgegenhaltungen:
- US-A- 4 273 220

## Beschreibung

Die vorliegende Erfindung betrifft einen Schwingungsdämpfer, insbesondere einen Einrohrdämpfer, gemäß dem 0berbegriff des Anspruchs 1.

Bei einzylindrischen Schwingungsdämpfern, die durch einen hin- und herbewegbaren Kolben in zwei Arbeitskammern aufgeteilt sind, ist es erforderlich, einen in Folge der ungleichen Verdrängung der Dämpferflüssigkeit durch die Kolbenstange notwendigen Volumenausgleich zu schaffen. Ein derartiger Volumenausgleich kann beispielsweise durch in einem der Kolbenstange entgegengesetzten Arbeitsraum angeordnete und kompressible Elemente bzw. Medien bereitgestellt werden.

Aus der DE 1 195 615 ist ein Schwingungsdämpfer mit einem Arbeitszylinder sowie einem in diesem axial verschiebbar angeordneten Arbeitskolben bekannt, wobei der Arbeitskolben den Arbeitszylinder in einen ersten und einen zweiten Arbeitsraum unterteilt. Der bekannte Schwingungsdämpfer umfasst des Weiteren einen Ausgleichszylinder mit einem in diesem axial verschiebbar angeordneten Ausgleichskolben, der den Ausgleichszylinder in einen ersten und einen zweiten Arbeitsraum unterteilt, wobei der erste Arbeitsraum des Ausgleichszylinders flüssigkeitsgefüllt ist und mit dem zweiten Arbeitsraum des Arbeitszylinders über einen verhältnismäßig engen Drosselkanal in Verbindung steht. Im nicht flüssigkeitsgefüllten zweiten Arbeitsraum des Ausgleichszylinders ist eine Feder vorgesehen, welche gegen den abdichtenden Ausgleichskolben drückt. Bei dem bekannten Schwingungsdämpfer ist der Ausgleichszylinder um 90° zum Arbeitszylinder verdreht angeordnet. Nachteilig ist hierbei, dass die Anordnung des Ausgleichszylinders stirnendseitig des Arbeitszylinders an einer besonders hoch belasteten Stelle des Schwingungsdämpfers erfolgt, wodurch eine Wandung des Ausgleichszylinders entsprechend dick ausgebildet sein muss und dadurch der Schwingungsdämpfer an sich ein relativ hohes Gewicht aufweist.

Die US 4,273,220 zeigt einen Dämpfer für ein Motorrad, umfassend ein Gehäuse, welches einen ersten und einen zweiten Zylinder aufweist, wobei diese Zylinder über ein Verbindungsöhr miteinander verbunden sind, wobei das Verbindungsöhr zwei Anschlussabschnitte aufweist, deren Achsen in unterschiedlichen Richtungen orientiert sind.

Weitere Schwingungsdämpfer sind beispielsweise aus der DE 197 50 414 C2 und aus der DE 18 63 823 bekannt.

Die vorliegende Erfindung beschäftigt sich mit dem Problem, für einen Schwingungsdämpfer der gattungsgemäßen Art eine verbesserte Ausführungsform anzugeben, welche insbesondere einem immer geringer werdenden Bauraumangebot im Bereich der Schwingungsdämpfer gerecht wird.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem gattungsgemäßen Schwingungsdämpfer mit einem Arbeitszylinder und einem Ausgleichszylinder, letzteren längsendseitig des Arbeitszylinders und schräg zu diesem anzuordnen. Der erfindungsgemäße Schwingungsdämpfer umfasst dabei in bekannter Weise den Arbeitszylinder mit einem in diesem axial verschiebbar angeordneten Arbeitskolben, welcher den Arbeitszylinder in einen ersten und zweiten Arbeitsraum unterteilt sowie einen Ausgleichszylinder mit einem Ausgleichskolben, welcher den Ausgleichszylinder in einen ersten und einen zweiten Arbeitsraum unterteilt und wobei der erste Arbeitsraum des Ausgleichszylinders druckverbunden mit dem zweiten Arbeitsraum des Arbeitszylinders ist. Von besonderem Vorteil bezüglich der längsendseitig des Arbeitszylinders in Schräglage angeordneten Ausgleichszylinders ist, dass hiermit ein knapp bemessenes Bauraumangebot im Bereich einer Fahrwerksanbindung konstruktiv in vorteilhafter Weise genutzt werden kann. Durch die schräge Anordnung des Ausgleichszylinders entsteht im Anbindungsbereich des Schwingungsdämpfers an das Fahrwerk ein Freiraum in Form einer Hohlkehle, welcher beispielsweise für eine Antriebswellendurchführung genutzt werden kann.

Gemäß einer vorteilhaften Weiterbildung der erfindungsgemäßen Lösung ist der zweite Arbeitsraum des Ausgleichszylinders mit einem Gas befüllt. Ein Gas ist ein kompressibles Medium, welches im Vergleich zu aus dem Stand der Technik bekannten zusammendrückbaren Elementen, wie beispielsweise elastischen Werkstoffen oder Federn, günstig und gleichzeitig verschleißfrei ist. Je nach aufgebrachtem Druck im zweiten Arbeitsraum des Ausgleichszylinders bzw. je nach Größe des Volumens des Ausgleichszylinders kann darüber hinaus in einfacher Weise Einfluss auf die Dämpfungseigenschaften des Schwingungsdämpfers genommen werden.

Erfindungsgemäß ist der Ausgleichszylinder in eine Dämpfergabel integriert. Hierbei ist denkbar, dass die Dämpfergabel als einstückiges Bauteil hergestellt wird, wodurch ein nachträgliches Befestigen bzw. Montieren des Ausgleichszylinders an der Dämpfergabel entfallen kann. Durch die Integration des Ausgleichszylinders in die Dämpfergabel können somit Herstellungskosten reduziert werden.

Zweckmäßig ist die Längsmittelachse des Ausgleichszylinders ca. 10 bis 60° zur Längsmittelachse des Arbeitszylinders geneigt. Aus diesem Neigungsbereich wird bereits deutlich, dass die Anordnung des Ausgleichszylinders stirnendseitig des Arbeitszylinders in Abhängigkeit des zur Verfügung stehenden Bauraumangebotes gewählt werden kann und dadurch den zur Verfügung stehenden Bauraum besonders effektiv nutzt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Längsschnittdarstellung durch einen erfindungsgemäßen Schwingungsdämpfer,
- Fig. 2: eine Schnittdarstellung im Detail im Bereich eines Ausgleichszylinders,
- Fig. 3: eine perspektivische Ansicht eines in eine Dämpfergabel integrierten Ausgleichszylinders.

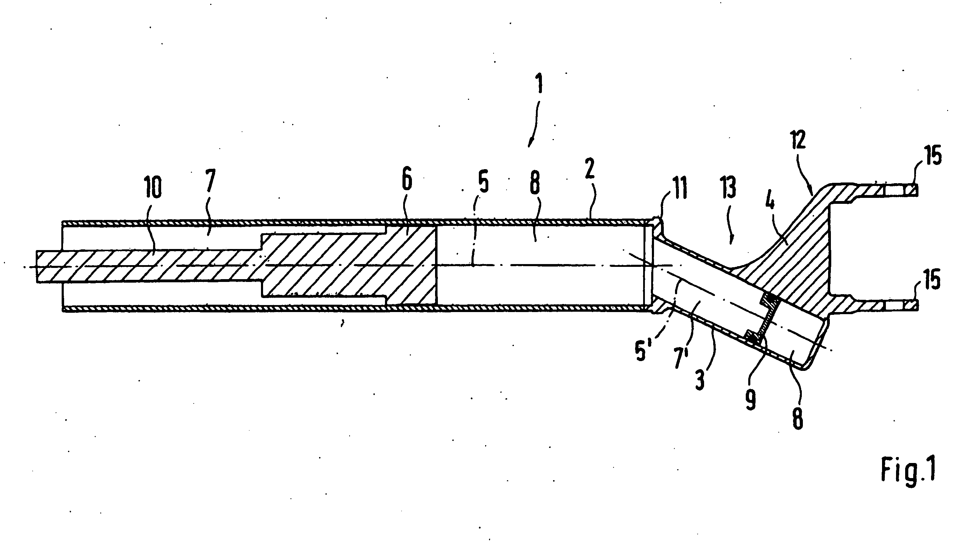

Entsprechend der Fig. 1 weist ein erfindungsgemäßer Schwingungsdämpfer 1 einen Arbeitszylinder 2, einen Ausgleichszylinder 3 sowie ein Befestigungselement 4 auf. Der in Fig. 1 gezeigte Schwingungsdämpfer 1 ist dabei als Einrohrdämpfer ausgebildet. Innerhalb des Arbeitszylinders 2 ist ein in diesem axial entlang einer Zylinderachse 5 verschiebbar angeordneter und mit nicht gezeigten Drosseleinrichtungen für beide Durchgangsrichtungen versehener Arbeitskolben 6 vorgesehen. Der Arbeitskolben 6 unterteilt dabei den Arbeitszylinder 2 in zwei Arbeitsräume, nämlich einen ersten Arbeitsraum 7, welcher gemäß der Fig. 1 links des Arbeitskolbens 6 angeordnet ist und in einen zweiten Arbeitsraum 8, welcher gemäß der Fig. 1 rechts des Arbeitskolbens 6 angeordnet ist.

Im Ausgleichszylinder 3 ist ein Ausgleichskolben 9 angeordnet, welcher ähnlich des Arbeitskolbens 6 den Ausgleichszylinder 3 in einen ersten Arbeitsraum 7' und einen zweiten Arbeitsraum 8' unterteilt. Der erste Arbeitsraum 7' des Ausgleichszylinders 3 steht dabei in Verbindung mit dem zweiten Arbeitsraum 8 des Arbeitszylinders 2. Bei einer Verstellbewegung des Arbeitskolbens 6 entlang der Zylinderachse 5 strömt Hydraulikmedium, beispielsweise Öl von einem Arbeitsraum des Arbeitszylinders 2 durch die Drosseleinrichtungen im Arbeitskolben 6 in den anderen Arbeitsraum. Hierbei muss jedoch das Volumen einer Kolbenstange 10 ausgeglichen werden, was mittels des Ausgleichszylinders 3 erfolgt. Im Gegensatz zum Arbeitskolben 6 weist der Ausgleichskolben 9 keine Drosseleinrichtungen auf und trennt die beiden Arbeitsräume 7' und 8' dicht voneinander. Der Ausgleichskolben 9 ist somit als Trennkolben ausgebildet und bewirkt die fluidische Trennung des ersten Arbeitsraumes 7' des Ausgleichszylinders 3 vom zweiten Arbeitsraum 8' des Ausgleichkolbens 3. Der zweite Arbeitsraum 8' des Ausgleichszylinders 3 ist dabei mit einem kompressiblen Medium, beispielsweise einem Gas gefüllt, welches entsprechend dem im ersten Arbeitsraum 7' des Ausgleichszylinders 3 herrschenden Drucks komprimiert wird. Der zweite Arbeitsraum 8' des Ausgleichszylinders 3 ist im Betriebszustand des Schwingungsdämpfers 1 nach außen dicht abgeschlossen.

Im Vergleich zum Arbeitskolben 6 besitzt der Ausgleichskolben 9 auch keine Kolbenstange, sondern ist lediglich über eine Innenmantelfläche des Ausgleichszylinders 3 geführt, wobei eine homogene Druckverteilung über die Querschnittsfläche des Ausgleichskolbens 9 ein Verkanten desselben im Ausgleichszylinder 3 verhindert. Bei einer Verstellbewegung des Arbeitskolbens 6 führt der Ausgleichskolben 9 daher eine entsprechende Verstellbewegung entlang der Zylinderachse 5' aus.

Erfindungsgemäß ist nun der Ausgleichszylinder 3 längsendseitig des Arbeitszylinders 2 und schräg zu diesem angeordnet. Wie in Fig. 1 weiter gezeigt, kann die Anordnung derart gewählt werden, dass die Zylinderachse 5 (Längsmittelachse) des Arbeitszylinders 2 die Zylinderachse 5' (Längsmittelachse) des Ausgleichszylinders 3 schneidet. Dabei ist die Zylinderachse 5' des Ausgleichszylinders 3 vorzugsweise um ca. 10 bis 60° - gemäß Fig. 1 um 25° - zur Zylinderachse 5 des Arbeitszylinders 2 geneigt. Die Neigung kann dabei in Abhängigkeit eines Bauraumangebotes gewählt werden und verkürzt auf jeden Fall die Baulänge des Schwingungsdämpfers 1.

Wie der Fig. 1 weiter zu entnehmen ist, ist der Ausgleichszylinder 3 stirnendseitig des Arbeitszylinders 2 angeordnet, wobei ein Durchlassquerschnitt zwischen dem zweiten Arbeitsraum 8 des Arbeitszylinders 2 und dem ersten Arbeitsraum 7' des Ausgleichszylinders 3 vorzugsweise größer ist als eine Querschnittsfläche des Ausgleichszylinders 3.

Eine Befestigung des Ausgleichszylinders 3 am Arbeitszylinder 2 erfolgt dabei über einen Flansch 11, welcher arbeitszylinderseitig am Ausgleichszylinder 3 ausgebildet ist und eine entsprechende Verbindung mit dem Arbeitszylinder 2 erlaubt. Eine derartige Verbindung kann beispielsweise über eine Verschraubung oder eine Schweißverbindung hergestellt werden. Denkbar ist natürlich auch, dass der Flansch 11 nicht am Ausgleichszylinder 3, sondern am Arbeitszylinder 2 vorgesehen ist.

Wie in den Fig. 1 bis 3 gezeigt, ist der Ausgleichszylinder 3 Teil eines Befestigungselementes 4, welches eine Befestigung des Schwingungsdämpfers 1 an einer Fahrwerkskonstruktion erlaubt. Gemäß den Fig. 1 bis 3 ist dabei das Befestigungselement 4 als Dämpfergabel 12 ausgebildet und der Ausgleichszylinder 3 integraler Bestandteil dieser Dämpfergabel 12. Um die Dämpfergabel 12 kostengünstig herstellen zu können, ist diese vorzugsweise zusammen mit dem Ausgleichszylinder 3 als einstückiges Bauteil ausgebildet und wird in einem Arbeitsschritt hergestellt.

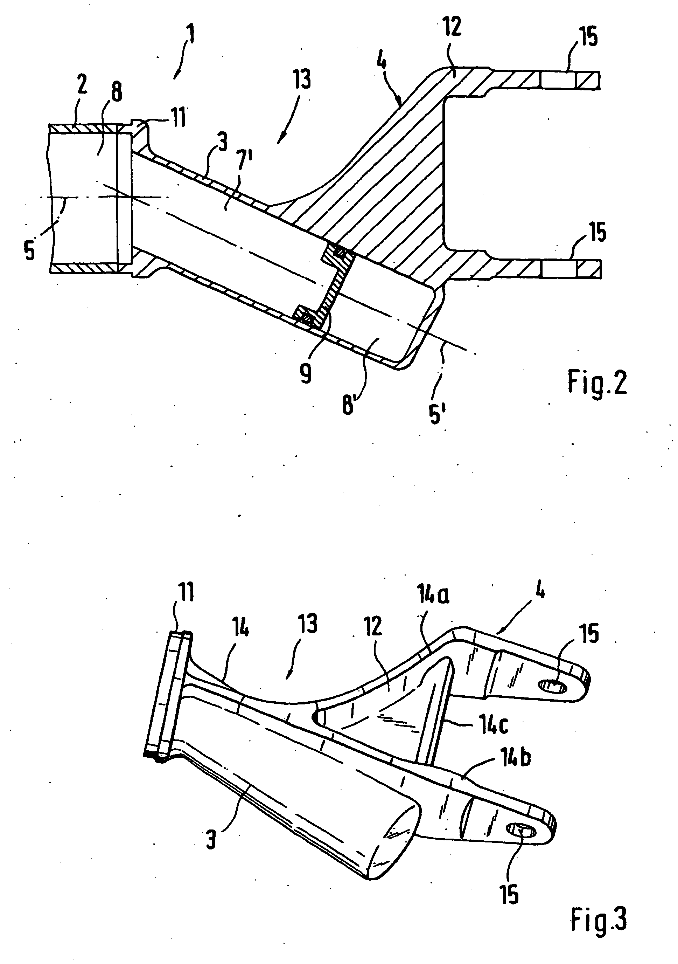

Durch die schräge Anordnung des Ausgleichszylinders 3 stirnendseitig des Arbeitszylinders 2 weist die Dämpfergabel 12 eine Hohlkehle 13 auf, durch welche nicht gezeigte Fahrwerksbestandteile, beispielsweise eine Antriebswelle geführt werden können. Diese ist insbesondere im Hinblick auf ein sehr begrenztes Bauraumangebot im Bereich der Fahrwerksanbindung von großem Vorteil. Um eine ausreichende Stabilität des Befestigungselementes 4 gewährleisten zu können, weist dieses, wie in Fig. 3 gezeigt, Versteifungssteg 14 auf, die das Befestigungselement 4 vom Flansch 11 ausgehend bis zu den Anbindungspunkten 15 am Fahrwerk durchziehen. Dabei verläuft zunächst beidseitig des Ausgleichszylinders 3 ein Versteifungssteg 14 ausgehend vom Flansch 11 bis zu ca. der Hälfte der axialen Längserstreckung des Ausgleichszylinders 3, um sich dort in zwei Versteifungsstege 14a und 14b zu teilen, welche weiter bis zu den Anwendungspunkten 15 verlaufen. Ebenfalls vorgesehen ist eine Querversteifung durcheinen zwischen den Versteifungsstegen 14a, 14b verlaufenden Versteifungssteg 14c.

## Patentansprüche

1. Schwingungsdämpfer (1), insbesondere Einrohrdämpfer, umfassend,
- einen Arbeitszylinder (2) mit einem in diesem axial verschiebbar angeordneten und mit Drosseleinrichtungen für beide Durchgangsrichtungen versehenen Arbeitskolben (6), wobei der Arbeitskolben (6) den Arbeitszylinder (2) in einen ersten und einen zweiten Arbeitsraum (7, 8) unterteilt,
- einen Ausgleichszylinder (3) mit einem in diesem axial verschiebbar angeordneten Ausgleichskolben (9), wobei der Ausgleichskolben (9) den Ausgleichszylinder (3) in einen ersten und einen zweiten Arbeitsraum (7', 8') unterteilt und wobei der erste Arbeitsraum (7') des Ausgleichszylinders (3) mit dem zweiten Arbeitsraum (8) des Arbeitszylinders (2) kommunizierend verbunden ist,
wobei der Ausgleichszylinder (3) längsendseitig des Arbeitszylinders (2) und schräg zu diesem angeordnet ist, **dadurch gekennzeichnet,**
**dass** der Ausgleichszylinder (3) Teil eines Befestigungselements (4) zum Befestigen des Schwingungsdämpfers (1) an einer Fahrwerkskonstruktion ist, dass das Befestigungselement (4) als Dämpfergabel (12) ausgebildet und der Ausgleichszylinder (3) integraler Bestandteil dieser Dämpfergabel (12) ist, und dass die Dämpfergabel (12) eine Hohlkehle (13) aufweist.

2. Schwingungsdämpfer nach Anspruch 1, **dadurch gekennzeichnet, dass** der zweite Arbeitsraum (8') des Ausgleichszylinders (3) mit einem Gas gefüllt ist.

3. Schwingungsdämpfer nach Anspruch 1 oder 2, **dadurch gekennzeichnet, dass** der Ausgleichszylinder (3) und das Befestigungselement (4) einstückig ausgebildet sind.

4. Schwingungsdämpfer nach einem der Ansprüche 1 bis 3, **dadurch gekennzeichnet, dass** der Ausgleichskolben (9) als Trennkolben ausgebildet ist und den ersten Arbeitsraum (7') des Ausgleichszylinders (3) vom zweiten Arbeitsraum (8') des Ausgleichszylinders (3) fluidisch trennt.

5. Schwingungsdämpfer nach einem der Ansprüche 1 bis 4, **dadurch gekennzeichnet, dass** der zweite Arbeitsraum (8') des Ausgleichszylinders (3) nach außen hin abgeschlossen ist.

6. Schwingungsdämpfer nach einem der Ansprüche 1 bis 5, **dadurch gekennzeichnet, dass** der Ausgleichskolben (9) lediglich über eine Innenmantelfläche des Ausgleichszylinders (3) geführt ist.

7. Schwingungsdämpfer nach einem der Ansprüche 1 bis 6, **dadurch gekennzeichnet, dass** die Längsmittelachse (5) des Arbeitszylinders (2) die Längsmittelachse (5') des Ausgleichszylinders (3) schneidet.

8. Schwingungsdämpfer nach einem der Ansprüche 1 bis 7, **dadurch gekennzeichnet, dass** die Längsmittelachse (5) des Arbeitszylinders (2) 10 bis 60 Grad zur die Längsmittelachse (5') des Ausgleichszylinders (3) geneigt ist.

9. Schwingungsdämpfer nach einem der Ansprüche 1 bis 8, **dadurch gekennzeichnet,**
- **dass** der Ausgleichszylinder (3) stirnendseitig des Arbeitszylinders (2) angeordnet ist, und/oder
- **dass** arbeitszylinderseitig am Ausgleichszylinder (3) ein Flansch (11) zum Befestigen des Ausgleichszylinders (3) am Arbeitszylinder (2) vorgesehen ist.

10. Kraftfahrzeug mit einem Schwingungsdämpfer nach einem der Ansprüche 1 bis 9.

## Claims

1. Vibration damper (1), in particular single-tube damper, comprising
- a working cylinder (2) having a working piston (6) which is arranged in an axially movable fashion therein and which is provided with throttle devices for both passage directions, with the working piston (6) dividing the working cylinder (2) into a first and a second working chamber (7, 8),
- a compensating cylinder (3) having a compensating piston (9) which is arranged in an axially movable fashion therein, with the compensating piston (9) dividing the compensating cylinder (3) into a first and a second working chamber (7', 8') and with the first working chamber (7') of the compensating cylinder (3) being connected in a communicating fashion to the second working chamber (8) of the working cylinder (2),
with the compensating cylinder (3) being arranged at the longitudinal end side of the working cylinder (2) and obliquely with respect thereto, **characterized**
**in that** the compensating cylinder (3) is part of a fastening element (4) for fastening the vibration damper (1) to a chassis structure, in that the fastening element (4) is designed as a damper fork and the compensating cylinder (3) is an integral constituent part of said damper fork (12), and in that the damper fork (12) has a hollow moulding (13).

2. Vibration damper according to Claim 1, **characterized in that** the second working chamber (8') of the compensating cylinder (3) is filled with a gas.

3. Vibration damper according to Claim 1 or 2, **characterized in that** the compensating cylinder (3) and the fastening element (4) are formed in one piece.

4. Vibration damper according to one of Claims 1 to 3, **characterized in that** the compensating piston (9) is designed as a separating piston and fluidically separates the first working chamber (7') of the compensating cylinder (3) from the second working chamber (8') of the compensating cylinder (3).

5. Vibration damper according to one of Claims 1 to 4, **characterized in that** the second working chamber (8') of the compensating cylinder (3) is closed off to the outside.

6. Vibration damper according to one of Claims 1 to 5, **characterized in that** the compensating piston (9) is guided only by means of an inner lateral surface of the compensating cylinder (3).

7. Vibration damper according to one of Claims 1 to 6, **characterized in that** the longitudinal central axis (5) of the working cylinder (2) intersects the longitudinal central axis (5') of the compensating cylinder (3).

8. Vibration damper according to one of Claims 1 to 7, **characterized in that** the longitudinal central axis (5) of the working cylinder (2) is inclined at an angle of 10 to 60 degrees with respect to the longitudinal central axis (5') of the compensating cylinder (3).

9. Vibration damper according to one of Claims 1 to 8, **characterized**
- **in that** the compensating cylinder (3) is arranged at the face end side of the working cylinder (2), and/or
- **in that** a flange (11) for fastening the compensating cylinder (3) to the working cylinder (2) is provided on the compensating cylinder (3) at the working cylinder side.

10. Motor vehicle having a vibration damper according to one of Claims 1 to 9.

## Revendications

1. Amortisseur d'oscillations (1), en particulier amortisseur monotube, comprenant :
- un cylindre de travail (2) avec un piston de travail (6) disposé de manière déplaçable axialement dans celui-ci et pourvu de dispositifs d'étranglement pour les deux directions de passage, le piston de travail (6) divisant le cylindre de travail (2) en un premier et un deuxième espace de travail (7, 8),
- un cylindre de compensation (3) avec un piston de compensation (9) disposé de manière déplaçable axialement dans celui-ci, le piston de compensation (9) divisant le cylindre de compensation (3) en un premier et un deuxième espace de travail (7', 8') et le premier espace de travail (7') du cylindre de compensation (3) étant connecté par communication au deuxième espace de travail (8) du cylindre de travail (2) ,
le cylindre de compensation (3) étant disposé du côté de l'extrémité longitudinale du cylindre de travail (2) et obliquement par rapport à celui-ci,
**caractérisé en ce que**
le cylindre de compensation (3) fait partie d'un élément de fixation (4) pour la fixation de l'amortisseur d'oscillations (1) à une construction de châssis, **en ce que** l'élément de fixation (4) est réalisé sous forme de fourche d'amortissement (12) et le cylindre de compensation (3) fait partie intégrante de cette fourche d'amortissement (12), et **en ce que** la fourche d'amortissement (12) est une cannelure creuse (13).

2. Amortisseur d'oscillations selon la revendication 1, **caractérisé en ce que** le deuxième espace de travail (8') du cylindre de compensation (3) est rempli de gaz.

3. Amortisseur d'oscillations selon la revendication 1 ou 2, **caractérisé en ce que** le cylindre de compensation (3) et l'élément de fixation (4) sont réalisés d'une seule pièce.

4. Amortisseur d'oscillations selon l'une quelconque des revendications 1 à 3, **caractérisé en ce que** le piston de compensation (9) est réalisé sous forme de piston de séparation et sépare fluidiquement le premier espace de travail (7') du cylindre de compensation (3) du deuxième espace de travail (8') du cylindre de compensation (3).

5. Amortisseur d'oscillations selon l'une quelconque des revendications 1 à 4, **caractérisé en ce que** le deuxième espace de travail (8') du cylindre de compensation (3) est fermé vers l'extérieur.

6. Amortisseur d'oscillations selon l'une quelconque des revendications 1 à 5, **caractérisé en ce que** le piston de compensation (9) est guidé uniquement par le biais d'une surface d'enveloppe interne du cylindre de compensation (3).

7. Amortisseur d'oscillations selon l'une quelconque des revendications 1 à 6, **caractérisé en ce que** l'axe médian longitudinal (5) du cylindre de travail (2) couple l'axe médian longitudinal (5') du cylindre de compensation (3).

8. Amortisseur d'oscillations selon l'une quelconque des revendications 1 à 7, **caractérisé en ce que** l'axe médian longitudinal (5) du cylindre de travail (2) est incliné de 10 à 60 degrés par rapport à l'axe médian longitudinal (5') du cylindre de compensation (3).

9. Amortisseur d'oscillations selon l'une quelconque des revendications 1 à 8, **caractérisé en ce que**
- le cylindre de compensation (3) est disposé du côté de l'extrémité frontale du cylindre de travail (2) et/ou
- **en ce que** du côté du cylindre de travail, au niveau du cylindre de compensation (3), une bride (11) est prévue pour fixer le cylindre de compensation (3) au cylindre de travail (2).

10. Véhicule automobile comprenant un amortisseur d'oscillations selon l'une quelconque des revendications 1 à 9.
